# EUROPÄISCHE PATENTANMELDUNG

(11) **EP 2 977 943 A1**
(43) Veröffentlichungstag der Anmeldung: **27.01.2016**
(21) Anmeldenummer: 15175207.8
(22) Anmeldetag: 03.07.2015
(51) Int. Cl.: G06Q 10/08

(54) **VERFAHREN UND VORRICHTUNG ZUR UNTERSTÜTZUNG DES ABHOLVORGANGES VON EINKAUFSGÜTERN**

(30) Priorität: 25.07.2014 DE 102014214624
(71) Anmelder: Ford Global Technologies, LLC, Dearborn, MI 48126 (US)
(72) Erfinder: Shah, Jitendra, 700056 Kolkata, West Bengal (IN); Ress, Christian, 52078 Aachen (DE); Wolter, Stefan, 52146 Würselen (DE)
(74) Vertreter: Dörfler, Thomas

(57) **Zusammenfassung**

Die Erfindung betrifft ein Verfahren und eine Vorrichtung zur Unterstützung des Abholvorganges von Einkaufsgütern, wobei die Einkaufsgüter (50) seitens eines Geschäfts (20) auf eine entsprechende Anforderung eines die Einkaufsgüter (50) erwerbenden Nutzers bereitgestellt und von einer Lieferperson (30) zu einem Fahrzeug (10) des Nutzers gebracht werden. Dabei wird auf Basis einer drahtlosen Datenübertragung zwischen dem die Einkaufsgüter (50) erwerbenden Nutzer und dem Geschäft (20) ein Zugriffscode zum Öffnen bzw. Schließen eines Kofferraums des Fahrzeugs (10) erzeugt, um der Lieferperson (30) ein selbständiges Verladen der Einkaufsgüter (50) in das Fahrzeug (10) zu ermöglichen.

## Beschreibung

Die Erfindung betrifft ein Verfahren und eine Vorrichtung zur Unterstützung des Abholvorganges von Einkaufsgütern.

Der routinemäßige Einkauf alltäglicher Artikel wie z.B. Lebensmittel stellt für zahlreiche Personen eine lästige und langweilige Aufgabe dar.

Aus JP 2009-211476 A ist u.a. ein System zur Unterstützung der Dienstleistung eines Transports von seitens eines Nutzers erworbenen Einkaufsgütern zur Parkposition eines Plug-In-Fahrzeugs des betreffenden Nutzers bekannt, bei welchem ein auf Seiten des Geschäfts vorhandenes Verkaufsmanagementsystem mit einem auf Seiten des geparkten und an ein Ladekabel sowie ein Telekommunikationskabel angeschlossenen Plug-In-Fahrzeugs vorhandenen Bordsystem verknüpft wird. Das System weist insbesondere eine Einrichtung zur Spezifizierung der Parkposition des betreffenden Fahrzeuges, eine Entriegelungseinrichtung zur Entriegelung des Kofferraums oder der Fahrzeugtüren des betreffenden Kraftfahrzeuges nach erfolgtem Transport der Einkaufsgüter zur Parkposition des Fahrzeuges sowie ein fahrzeugseitiges Lesegerät ("Tag-Reader") zum Lesen einer z.B. am Tragebehälter bzw. Einkaufskorb vorhandenen Kennzeichnung auf. Dabei kann der Kofferraum auf Basis eines Vergleichs zwischen einer in einem fahrzeugseitigen System vorhandenen Schlüsselinformation und der am Tragebehälter bzw. Einkaufskorb vorhandenen Kennzeichnung entriegelt werden.

Es ist eine Aufgabe der vorliegenden Erfindung, ein Verfahren und eine Vorrichtung zur Unterstützung des Abholvorganges von Einkaufsgütern bereitzustellen, durch welche der seitens der die Einkaufsgüter erwerbenden Person für die Abholung erforderliche Aufwand weiter reduziert wird.

Diese Aufgabe wird durch das Verfahren gemäß den Merkmalen des unabhängigen Patentanspruchs 1 sowie die Vorrichtung gemäß den Merkmalen des nebengeordneten Anspruchs 9 gelöst.

Bei einem erfindungsgemäßen Verfahren zur Unterstützung des Abholvorganges von Einkaufsgütern werden die Einkaufsgüter seitens eines Geschäfts auf eine entsprechende Anforderung einer die Einkaufsgüter erwerbenden Nutzers bereitgestellt und von einer Lieferperson zu einem Fahrzeug des Nutzers gebracht.

Das Verfahren ist dadurch gekennzeichnet, dass auf Basis einer drahtlosen Datenübertragung zwischen dem die Einkaufsgüter erwerbenden Nutzer und dem Geschäft ein Zugriffscode zum Öffnen bzw. Schließen eines Kofferraums des Fahrzeugs erzeugt wird, um der Lieferperson ein selbständiges Verladen der Einkaufsgüter in das Fahrzeug zu ermöglichen.

Der vorliegenden Erfindung liegt insbesondere das Konzept zugrunde, ein autonomes Kraftfahrzeug zur Abholung von Einkaufsgütern zu nutzen und hierbei insbesondere die Kommunikation zwischen dem betreffenden Geschäft, der die Einkaufsgüter erwerbenden Person sowie dem autonomen Fahrzeug zu optimieren, wobei für den Informationsaustausch zwischen dem autonomen Fahrzeug und einer (seitens des Geschäfts bereitgestellten) Lieferperson eine drahtlose Kommunikationstechnik genutzt wird.

Gemäß einer Ausführungsform ist das Fahrzeug ein autonomes Fahrzeug, welches dazu konfiguriert ist, die Wegstrecke zu dem die Einkaufsgüter bereitstellenden Geschäft zumindest teilweise selbsttätig navigierend zurückzulegen. Bei dem erfindungsgemäßen Verfahren kann somit insbesondere das autonome Kraftfahrzeug selbsttätig navigierend ausgesandt werden, um Einkaufsgüter von dem entsprechenden Auslieferungsort abzuholen.

Gemäß einer Ausführungsform wird der Zugriffscode seitens des Geschäfts in Reaktion auf eine von dem Nutzer vorgenommene Bestellung der Einkaufsgüter erzeugt. Des Weiteren wird in einer Ausführungsform der Zugriffscode erst nach abgeschlossener Bezahlung der Einkaufsgüter erzeugt.

Gemäß einer Ausführungsform erfolgt in Reaktion auf eine von der Lieferperson vorgenommene Eingabe des Zugriffscodes in eine Kommunikationsvorrichtung eine automatische Kofferraumentriegelung auf Seiten des Fahrzeugs.

Gemäß einer Ausführungsform erfolgt ferner eine Verifizierung der korrekten Verladung der Einkaufsgüter in das Fahrzeug. Insbesondere kann eine Identifizierung der seitens des Geschäfts zusammengepackten bzw. zur Abholung bereitgestellten (oder bereits in den Kofferraum verladenen) Einkaufsgüter bzw. eine Verifizierung der korrekten Bereitstellung oder Verladung der Einkaufsgüter, beispielsweise unter Verwendung eines Barcode-Scanners oder einer drahtlosen Identifizierungsmethode, erfolgen. Des Weiteren kann auch eine in dem Kofferraum montierte Kamera dazu genutzt werden, um die im Kofferraum platzierten Einkaufsgüter zu identifizieren und entsprechende Daten während der Dauer des Abhol- bzw. Auslieferungsvorganges aufzuzeichnen oder zu übertragen. Ferner kann während des Verladevorganges der Einkaufsgüter in den Kofferraum auch eine kameragestützte 360°-Umschau aktiviert werden.

Die Erfindung betrifft weiter eine Vorrichtung zur Unterstützung des Abholvorganges von Einkaufsgütern, wobei die Einkaufsgüter seitens eines Geschäfts auf eine entsprechende Anforderung eines die Einkaufsgüter erwerbenden Nutzers bereitgestellt und von einer Lieferperson zu einem Fahrzeug des Nutzers gebracht werden, wobei die Vorrichtung dazu ausgelegt ist, ein Verfahren mit den vorstehend beschriebenen Merkmalen durchzuführen.

Zu Vorteilen und bevorzugten Ausgestaltungen wird auf die vorstehenden Ausführungen im Zusammenhang mit dem erfindungsgemäßen Verfahren Bezug genommen.

Weitere Ausgestaltungen der Erfindung sind der Beschreibung sowie den Unteransprüchen zu entnehmen.

Es zeigen:
- Figur 1 - 3: schematische Darstellungen zur Veranschaulichung des erfindungsgemäßen Verfahrens sowie hierzu wesentlicher Komponenten; und
- Figur 4: ein Flussdiagramm zur Erläuterung eines typischen beispielhaften Ablauf des erfindungsgemäßen Verfahrens.

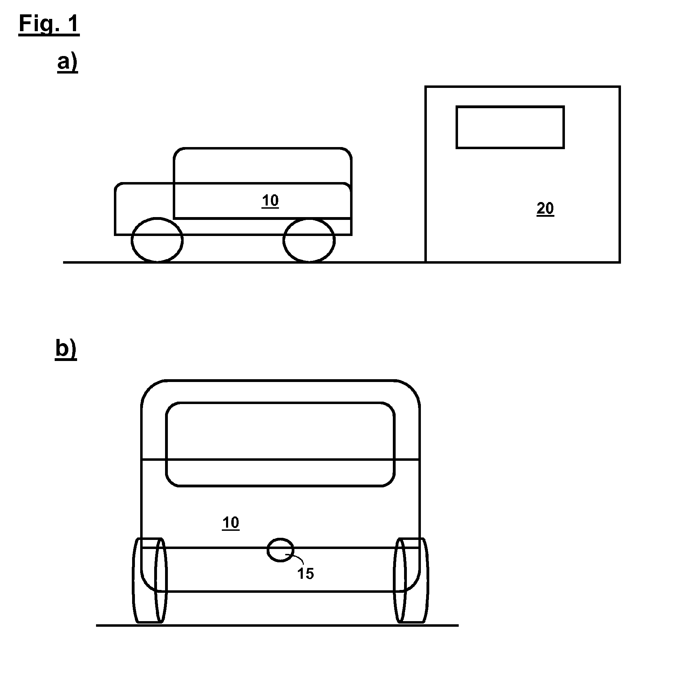

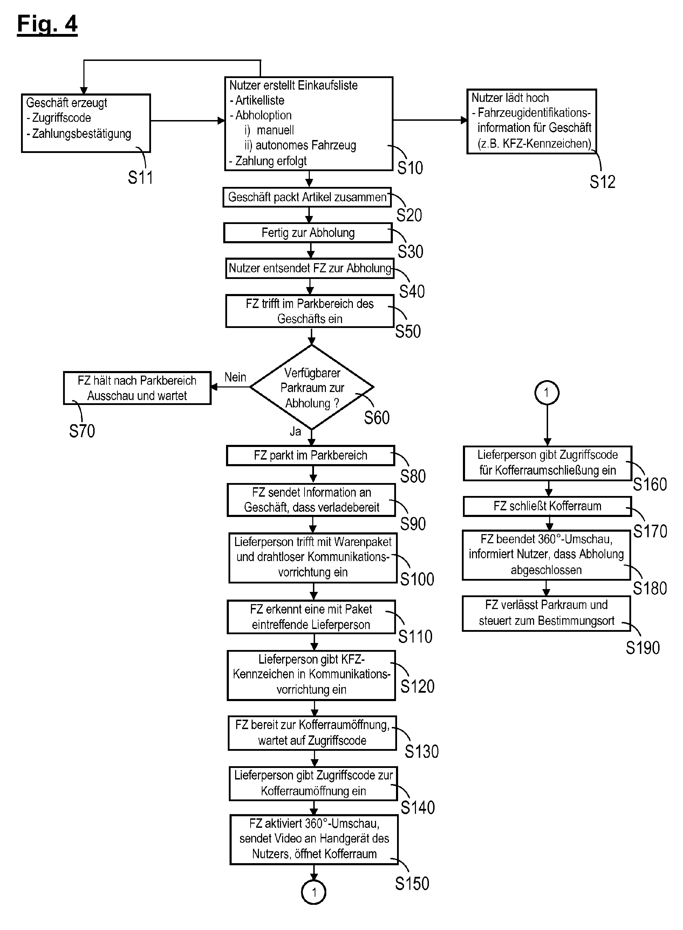

Im Weiteren werden ein typischer beispielhafter Ablauf des erfindungsgemäßen Verfahrens sowie die hierzu wesentlichen Komponenten unter Bezugnahme auf die schematischen Darstellungen von Fig. 1-3 sowie das in Fig. 4 dargestellte Flussdiagramm erläutert.

Zu Beginn des Verfahrens erstellt der die Einkaufsgüter erwerbende Nutzer gemäß Fig. 4 im Schritt S10 eine Einkaufsliste, wobei z.B. auch die Eingabemöglichkeit hinsichtlich einer Abholoption (dahingehend, ob die Abholung manuell oder unter Nutzung des autonomen Fahrzeugs erfolgen soll) gegeben ist. Ferner erfolgt die Zahlung der Einkaufsgüter durch den Nutzer.

Seitens des die Einkaufsgüter verkaufenden Geschäfts 20 wird sodann im Schritt S11 ein Zugriffscode sowie eine Zahlungsbestätigung erstellt. Des Weiteren lädt der Nutzer im Schritt S12 für das Geschäft 20 eine Fahrzeugidentifikationsinformation (typischerweise das KFZ-Kennzeichen seines Fahrzeugs) in das System hoch.

Daraufhin erfolgt im Schritt S20 das Zusammenpacken der Einkaufsgüter bzw. Artikel auf Seiten des Geschäfts 20 bzw. durch entsprechendes Personal, so dass die Einkaufsgüter 50 sodann entsprechend zur Abholung bereitstehen (S30). Der Nutzer entsendet im Ausführungsbeispiel daraufhin im Schritt S40 das autonome Fahrzeug 10 zur Abholung, welches im Schritt S50 in dem Parkbereich (z.B. Parkplatz des Geschäftes 20) eintrifft. Die Erfindung ist nicht auf ein selbsttätiges Navigieren des Fahrzeugs 10 zu dem Geschäft 20 beschränkt. So kann in weiteren Ausführungsformen der Nutzer das Fahrzeug 10 auch teilweise oder vollständig selbst zu dem Geschäft 20 steuern.

Im Schritt S60 wird überprüft, ob ein verfügbarer Parkplatz für die Abholung der Einkaufsgüter 50 bereitsteht. Falls dies nicht der Fall ist, erfolgt im Schritt S70 weiterhin die Überprüfung bzw. Abfrage von verfügbarem Parkraum seitens des autonomen Fahrzeugs 10. Sobald verfügbarer Parkraum am Geschäft 20 vorhanden ist, parkt im Schritt S80 das autonome Fahrzeug 10 im Parkbereich vor dem Geschäft 20, wie in Fig. 1 a-b sowohl in Seitenansicht (Fig. 1a) als auch in Rückansicht (Fig. 1 b) dargestellt ist. In Fig. 1 b ist ferner eine Kofferraumverriegelung 15 angedeutet.

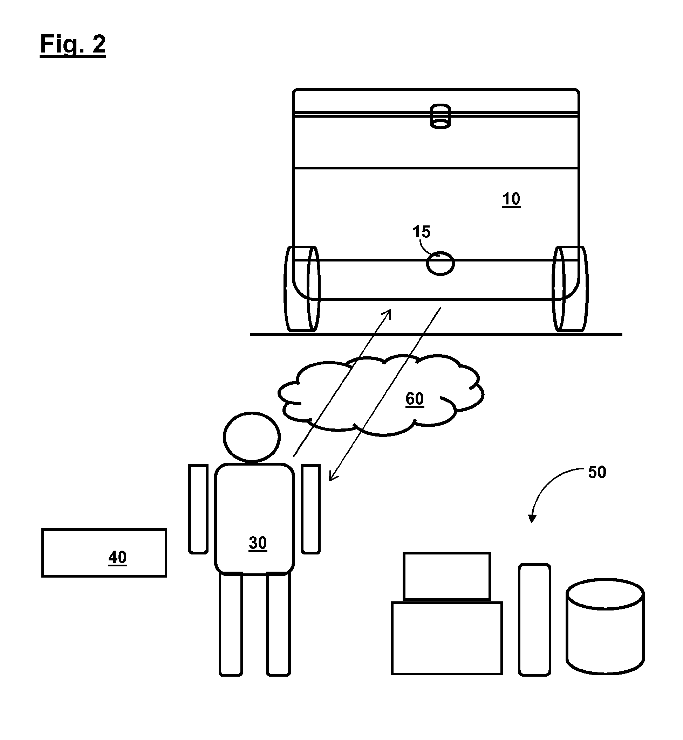

Daraufhin sendet das autonome Fahrzeug 10 im Schritt S90 die Information an das Geschäft 20, dass es bereit für den Verladevorgang ist. Eine seitens des Geschäfts 20 bereitgestellte Lieferperson 30 begibt sich daraufhin mit dem Warenpaket bzw. den erworbenen Einkaufsgütern 50 zu dem Fahrzeug 10, wo es gemäß Schritt S100 sowie der schematischen Darstellung von Fig. 2 eintrifft. Die Lieferperson 30 führt eine drahtlose Kommunikationsvorrichtung 40 mit sich.

Im Schritt S110 erkennt das autonome Fahrzeug 10 die mit den Einkaufsgütern 50 eingetroffene Lieferperson 30. Die Lieferperson 30 gibt daraufhin im Schritt S120 das KFZ-Kennzeichen in die Kommunikationsvorrichtung 40 ein. Im Schritt S130 ist das autonome Fahrzeug 10 bereit zur Kofferraumöffnung und wartet auf die Eingabe eines Zugriffscodes durch die Lieferperson 30, was im Schritt S140 zur Kofferraumöffnung stattfindet. Daraufhin erfolgt im Schritt S150 seitens des autonomen Fahrzeugs 10 die Aktivierung einer 360°-Umschau, wobei ferner ein entsprechendes Video an ein vom Nutzer mitgeführtes Handgerät (z.B. ein Handy oder Smartphone) übersandt werden kann. Der Kofferraum wird unter Betätigung der Kofferraumverriegelung 15 geöffnet.

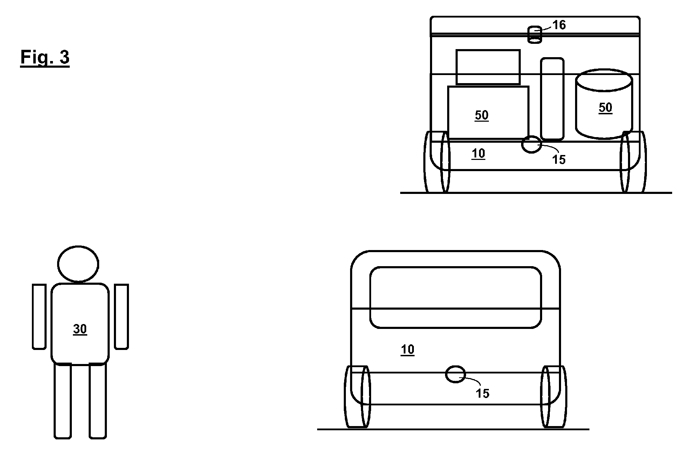

Nach vollendetem Verladen der Einkaufsgüter 50 (Zustand gemäß Fig. 3) gibt die Lieferperson 30 im Schritt S160 den Zugriffscode für die Kofferraumschließung ein, woraufhin im Schritt S170 das autonome Fahrzeug 10 den Kofferraum schließt. Des Weiteren kann nach vollendetem Verladen der Einkaufsgüter 50 in das Fahrzeug 10 eine Verifizierung bzw. Überprüfung der korrekten Verladung der Einkaufsgüter 50 erfolgen, wozu beispielsweise eine im Kofferraum des Fahrzeugs 10 montierte Kamera 16 gemäß Fig. 3 genutzt werden kann. Das autonome Fahrzeug 10 beendet daraufhin im Schritt S180 die 360°-Umschau und informiert den Nutzer darüber, dass der Abholvorgang abgeschlossen ist. Im Schritt S190 verlässt das autonome Fahrzeug 10 schließlich den Parkraum und steuert zu dem jeweiligen Bestimmungsort (z.B. der Wohnung des Nutzers).

## Patentansprüche

1. Verfahren zur Unterstützung des Abholvorganges von Einkaufsgütern, wobei die Einkaufsgüter (50) seitens eines Geschäfts (20) auf eine entsprechende Anforderung eines die Einkaufsgüter (50) erwerbenden Nutzers bereitgestellt und von einer Lieferperson (30) zu einem Fahrzeug (10) des Nutzers gebracht werden,
**dadurch gekennzeichnet, dass**
auf Basis einer drahtlosen Datenübertragung zwischen dem die Einkaufsgüter (50) erwerbenden Nutzer und dem Geschäft (20) ein Zugriffscode zum Öffnen bzw. Schließen eines Kofferraums des Fahrzeugs (10) erzeugt wird, um der Lieferperson (30) ein selbständiges Verladen der Einkaufsgüter (50) in das Fahrzeug (10) zu ermöglichen.

2. Verfahren nach Anspruch 1,
**dadurch gekennzeichnet, dass**
das Fahrzeug (10) ein autonomes Fahrzeug (10) ist, welches dazu konfiguriert ist, die Wegstrecke zu dem die Einkaufsgüter (50) bereitstellenden Geschäft (20) zumindest teilweise selbsttätig navigierend zurückzulegen.

3. Verfahren nach Anspruch 1 oder 2,
**dadurch gekennzeichnet, dass**
der Zugriffscode seitens des Geschäfts (20) in Reaktion auf eine von dem Nutzer vorgenommene Bestellung der Einkaufsgüter (50) erzeugt wird.

4. Verfahren nach einem der Ansprüche 1 bis 3,
**dadurch gekennzeichnet, dass**
der Zugriffscode erst nach abgeschlossener Bezahlung der Einkaufsgüter (50) erzeugt wird.

5. Verfahren nach einem der vorhergehenden Ansprüche,
**dadurch gekennzeichnet, dass**
in Reaktion auf eine von der Lieferperson (30) vorgenommene Eingabe des Zugriffscodes in eine Kommunikationsvorrichtung (40) eine automatische Kofferraumentriegelung auf Seiten des Fahrzeugs (10) erfolgt.

6. Verfahren nach einem der vorhergehenden Ansprüche,
**dadurch gekennzeichnet, dass**
ferner eine Verifizierung der korrekten Verladung der Einkaufsgüter (50) in das Fahrzeug (10) erfolgt.

7. Verfahren nach Anspruch 6,
**dadurch gekennzeichnet, dass**
diese Verifizierung kameragestützt, insbesondere unter Verwendung einer im Kofferraum des Fahrzeugs (10) montierten Kamera (16), erfolgt.

8. Verfahren nach Anspruch 6 oder 7, **dadurch gekennzeichnet, dass** diese Verifizierung unter Verwendung eines Barcode-Scanners erfolgt.

9. Verfahren nach Anspruch 6, 7 oder 8, **dadurch gekennzeichnet, dass** diese Verifizierung unter Verwendung einer drahtlosen Identifizierungsmethode erfolgt.

10. Vorrichtung zur Unterstützung des Abholvorganges von Einkaufsgütern, wobei die Einkaufsgüter (50) seitens eines Geschäfts (20) auf eine entsprechende Anforderung eines die Einkaufsgüter (50) erwerbenden Nutzers bereitgestellt und von einer Lieferperson (30) zu einem Fahrzeug (10) des Nutzers gebracht werden,
**dadurch gekennzeichnet, dass**
die Vorrichtung dazu ausgelegt ist, ein Verfahren nach einem der vorhergehenden Ansprüche durchzuführen.
